# EUROPEAN PATENT SPECIFICATION

(11) **EP 3 780 823 B1**
(45) Date of publication and mention of the grant of the patent: **30.07.2025**
(21) Application number: 19851434.1
(22) Date of filing: 22.07.2019
(51) Int. Cl.: H04W 72/04, H04W 24/10

(54) **DOWNLINK INFORMATION PROCESSING METHOD AND APPARATUS**
VERFAHREN UND VORRICHTUNG ZUR VERARBEITUNG VON DOWNLINK-INFORMATIONEN
PROCÉDÉ ET APPAREIL DE TRAITEMENT D'INFORMATIONS DE LIAISON DESCENDANTE

(30) Priority: 22.08.2018 CN 201810958608
(43) Date of publication of application: 17.02.2021
(73) Proprietor: ZTE Corporation, Shenzhen Guangdong 518057 (CN)
(72) Inventor: XIAO, Rencai, Shenzhen, Guangdong 518057 (CN)
(74) Representative: Betten & Resch
(86) International application number: PCT/CN2019/097025
(87) International publication number: WO 2020/038173

(56) References cited:
- CN-A- 101 425 884
- CN-A- 101 425 884
- CN-A- 102 149 206
- CN-A- 107 864 482
- US-A1- 2014 295 820
- US-A1- 2016 309 424
- HUAWEI ET AL: "On downlink channel quality measurement and report in Msg3", vol. RAN WG1, no. Sanya, China; 20180416 - 20180420, 15 April 2018 (2018-04-15), XP051426434, Retrieved from the Internet <URL:http://www.3gpp.org/ftp/Meetings%5F3GPP%5FSYNC/RAN1/Docs/> [retrieved on 20180415]
- QUALCOMM INCORPORATED: "NB-IOT RLM Enhancement for Rel-14", no. Gothenburg, Sweden; 20160822 - 20160826, 21 August 2016 (2016-08-21), XP051141247, Retrieved from the Internet <URL:http://www.3gpp.org/ftp/Meetings_3GPP_SYNC/RAN4/Docs/> [retrieved on 20160821]
- ERICSSON: "MAC aspects on DVI/BSR/PHR/etc for NB-IoT", vol. RAN WG2, no. Dubrovnik, Croatia; 20160411 - 20160415, 2 April 2016 (2016-04-02), XP051082544, Retrieved from the Internet <URL:http://www.3gpp.org/ftp/tsg_ran/WG2_RL2/TSGR2_93bis/Docs/> [retrieved on 20160402]

## Description

### TECHNICAL FIELD

This application relates to, but not limited to, mobile communication technology, in particular to a downlink information processing method and an electronic device.

### BACKGROUND

The wireless channel conditions of a communication system are constantly changing, and terminal signals in different coverage areas are also different. If low-order modulation is used in downlink transmission in the case of good channel quality, the spectrum efficiency is very low; on the contrary, if high-order coding is used in the case of poor channel quality, it will cause high bit error rate. Moreover, no matter what happens, there will be a waste of resources.

In a Long Term Eevolution (LTE) system, a terminal may report the downlink channel quality to an eNodeB through Channel State Information (CSI). In this way, the eNodeB can reasonably select a coding method according to the channel situation reported by the terminal, so as to improve resource utilization rate as much as possible. The terminal acquires the CSI by measuring a downlink reference signal, and reports a measurement result to the eNodeB through a Physical Uplink Control Channel (PUCCH) or a Physical Uplink Shared Channel (PUSCH).

In a Narrow Band Internet of Things (NB-IOT) system, the bandwidth is only 180K, so several physical channels used by LTE, including PUCCH channel, are cancelled, and the function of reporting the measurement result of terminal to the eNodeB is also cancelled. In the 3rd Generation Partnership Project (3GPP) R13 protocol, eNodeB can only estimate the downlink channel quality through the uplink channel quality, and determine the downlink coding mode based on the estimated value. The downlink coding mode obtained in this way cannot accurately reflect the actual channel quality.

US20140295820A1 discloses a method of controlling a discontinuous reception operation of a signal for a terminal in a wireless communication system including the steps of: measuring velocity-related information of the terminal; transmitting the measured velocity-related information to a base station; receiving from the base station, in response to the transmission of the velocity-related information, discontinuous reception operation set information for a variable discontinuous reception operation; and performing the discontinuous reception operation according to the received discontinuous reception operation set information.

CN107864482A discloses a measurement configuration method and apparatus of narrow-band Internet of Things, the method includes: receiving measurement GAP configuration parameters sent by a base station, wherein the measurement configuration parameters include measurement object parameters, measurement report configuration parameters and measurement GAP configuration parameters; after a preset time from receiving the measurement GAP configuration parameters, starting measurement GAP so as to measure a measurement object pointed by the measurement object parameters according to the measurement report configuration parameters during the duration of measurement GPA, and then acquiring a measurement report; and sending the measurement report to the base station so that the base station provides access services for a user device according to the measurement report.

While the above patent applications may achieve their intended purposes, there is still a need for a new and improved downlink information processing method and apparatus.

### SUMMARY

The following is a summary of the subject matter described in detail herein. This summary is not intended to limit the scope of protection of the claims.

According to embodiments of the present application, a downlink information processing method and an electronic device are provided.

The features of the downlink information processing method and the electronic device according to embodiments of the present invention are set out in the appended set of claims.

Other aspects will become apparent after reading and understanding the drawings and detailed description.

### BRIEF DESCRIPTION OF DRAWINGS

The drawings are provided for a further understanding of the technical solutions of the present application, and constitute a part of the description. The drawings and the embodiments of the present application are used to explain the technical solutions of the present application, and do not constitute a restriction on the technical solutions of the present application.
Fig. 1 is a flow chart of a downlink information processing method according to an embodiment of the present application;
Fig. 2 is a schematic flow chart of an embodiment of realizing downlink information processing through periodic reporting according to the present application;
Fig. 3 is a schematic flow chart of an embodiment of realizing downlink information processing through event reporting according to the present application;
Fig. 4 is a schematic flow chart of an embodiment of realizing downlink information processing through change reporting according to the present application;
Fig. 5 is a schematic flow chart of an embodiment of realizing downlink information processing through following reporting according to the present application;
Fig. 6 is a schematic flow chart of another embodiment of realizing downlink information processing through following reporting according to the present application; and
Fig. 7 is a schematic structural diagram of a downlink information processing apparatus according to an embodiment of the present application.

### DETAILED DESCRIPTION

Embodiments of the present application will be described below in detail with reference to the accompanying drawings. It is to be noted that if not in collision, the embodiments and features therein in the present application may be combined with each other.

The method for reporting downlink channel quality is mentioned in the proposal of 3GPP R14 protocol. On the one hand, in the method, the downlink channel quality is reported through Radio Resource Control (RRC) signaling, and the information of Reference Signal Received Power (RSRP) and Reference Signal Received Quality (RSRQ) is carried in the RRC connection setup complete-NB message. However, if the downlink channel quality changes during the connection process, the eNodeB cannot adjust the coding mode in time to adapt to the downlink. On the other hand, in the proposal, the downlink channel quality is reported through RRC signaling, not directly to the medium access control (MAC) layer, while the adjustment of the downlink coding mode is controlled by the MAC layer. That is to say, if the MAC layer needs to adjust the coding mode according to the link, it also needs to notify the MAC layer after RRC decoding. In this way, it may not be able to apply the downlink channel quality to the selection of the coding mode of the MAC layer in time.

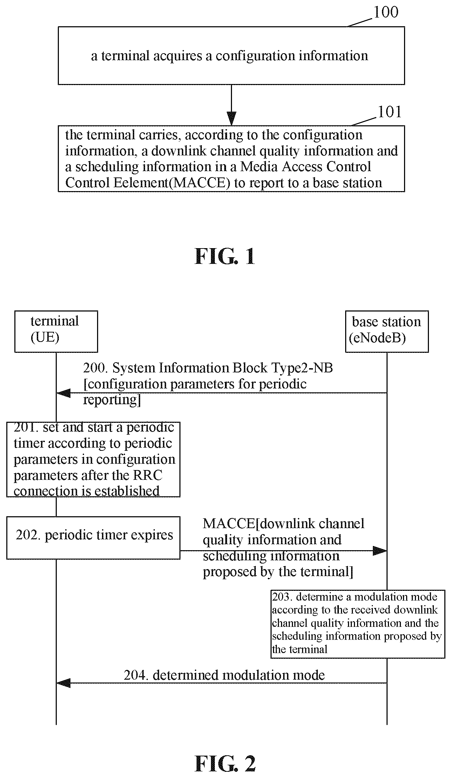

Fig. 1 is a flow chart of a downlink information processing method according to the present application, as shown in Fig. 1, step 100 and step 101are included.

At step 100, a terminal acquires configuration information.

In an exemplary example, the terminal may acquire the configuration information from a systematic message received from a base station or a RRC signaling. The configuration information includes: a reporting mode and a plurality of corresponding parameters, etc.

In an exemplary example, the configuration information may be pre-configured in the terminal, and the terminal only needs to read to obtain it. The configuration information includes: a reporting mode and a plurality of corresponding parameters, etc.

At step 101, the terminal carries, according to the configuration information, downlink channel quality information and scheduling information into an Media Access Control Control Element (MACCE) to report to a base station.

MACCE is a way to exchange control information between UE and network besides RRC messages and NAS messages in LTE, that is, MACCE exchanges the control information with respect to MAC layer.

In the downlink information processing method of the present application, MACCE is used to carry downlink measurement information and scheduling information, and the downlink measurement information and scheduling information are directly reported to the MAC layer. In this way, if the MAC layer needs to adjust the coding mode according to the link, the process of notifying the MAC layer after RRC decoding in related technologies is avoided, and the adjustment of downlink coding mode can quickly adapt to the needs of the downlink channel changes. In addition, the terminal also reports the scheduling information proposed by itself to the base station, which forms a dynamic negotiation process for scheduling information between the terminal and the base station, and better ensures the adaptability of the downlink coding mode to the change of downlink information.

In an embodiment, the downlink channel quality information includes any one or any combination of the following: Reference Signal Received Power(RSRP), which may be a RSRP measured by the terminal in LTE or NB-IOT system; Reference Signal Received Quality (RSRQ), which may be a RSRQ measured by the terminal in LTE or NB-IOT system; Channel Quality Indicator(CQI), which may be a CQI defined in 3GPP protocol standard, that is, CQI information used in LTE system; signal to interference plus noise ratio(SINR), which may be a SINR measured by the terminal in LTE or NB-IOT system.

In an embodiment, the scheduling information reported by the terminal is scheduling information proposed by the terminal according to the previous decoding situation and the current channel condition, including any one or any combination of the following: Modulation and Coding Scheme (MCS); modulation mode, which may be Binary Phase Shift Keying (BPSK), Quadrature Phase Shift Keying (QPSK) and so on specified in 3GPP protocol standard.

The number of downlink repetitions may be the number of repetitions of a Narrowband Physical Downlink Control Channel (NPDCCH) or a Narrowband Physical Downlink Shared Channel (NPDSCH) proposed by the terminal.

In an exemplary example, the logical channel group ID (LCG ID) field value of UL-SCH specified in the extending protocol may be used as the LCID of the newly added MACCE to carry the downlink channel quality information and the scheduling information. As shown in bold and italicized information in Table 1, values for the reserved fields 01101-10011 used in the embodiments of this application are used for reporting the downlink channel quality information and the scheduling information. Table 1 shows the LCID information defined on the UL-SCH channel specified by the protocol except for the above reserved fields, which will not be described here.

**Table 1**

| Index values | LCID values |
|---|---|
| 00000 | CCCH |
| 00001-01010 | Identity of the logical channel |
| 01011 | CCCH |
| 01100 | CCCH |
| *10011* | *RSRP* |
| *10010* | *RSRQ* |
| *10001* | *SINR* |
| *10000* | *CQI* |
| *01111* | *MCS* |
| *01110* | *Modulation* |
| *01101* | *Number of NPDCCH*/*NPDSCH repetitions* |
| 10100 | Recommended bit rate query |
| 10101 | SPS confirmation |
| 10110 | Truncated Sidelink BSR |
| 10111 | Sidelink BSR |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

The MAC PDU structure in NB-IOT system includes MAC header, MAC control element, MAC Service Data Unit (MAC SDU) and optional Padding. In this embodiment of the present application, the downlink channel quality information and the scheduling information may be carried by extending the MAC control element.

In an exemplary embodiment, as shown in Table 2, the extended MAC control element structure for carrying the downlink channel quality information and the scheduling information may occupy 8bits, which includes a logical channel group ID (LCG ID) field and an information field for carrying the downlink channel quality information and the scheduling information.

**Table 2**

| | |
|---|---|
| LCG ID Field(2bits) | Information Field(6bits) |

In an embodiment, in the NB-IOT system, the value of the LCG ID field is set to be 0, and the information carried in the information field may include, but is not limited to, any one or any combination of the following: RSRP, RSRQ, SINR, CQI, MCS, modulation mode or number of downlink repetitions, etc.

In an embodiment, the information carried in the information field may be an index value corresponding to a real value. As shown in the following tables, Table 3 is an example of an embodiment of the corresponding relationship between RSRP value and index value according to the present application, Table 4 is an example of an embodiment of the corresponding relationship between RSRQ value and index value according to the present application, and Table 5 is an example of an embodiment of the corresponding relationship between SINR value and index value according to the present application.

The reported downlink channel quality information is the measured value of the Anchor carrier or the measured value of the current resident carrier.

**Table 3**

| Index values | RSRP values |
|---|---|
| 0 | >-60dBm |
| 1 | -60dBm~-62dBm |
| 2 | -62dBm~-64dBm |
| 3 | -64dBm~-66dBm |
| 4 | -66dBm~-68dBm |
| 5 | -68dBm~-70dBm |
| 6 | -70dBm~-72dBm |
| 7 | -72dBm~-74dBm |
| 8 | -74dBm~-76dBm |
| 9 | -76dBm~-78dBm |
| 10 | -78dBm~-80dBm |
| 11 | -82dBm~-84dBm |
| 12 | -84dBm~-86dBm |
| 13 | -86dBm~-88dBm |
| 14 | -88dBm~-90dBm |
| 15 | -90dBm~-92dBm |
| 16 | -92dBm~-94dBm |
| 17 | -94dBm~-96dBm |
| 18 | -96dBm~-98dBm |
| 19 | -100dBm~-102dBm |
| 20 | -102dBm~-104dBm |
| 21 | -104dBm~-106dBm |
| 22 | -106dBm~-108dBm |
| 23 | -108dBm~-110dBm |
| 23 | -110dBm~-112dBm |
| 24 | -112dBm~-114dBm |
| 25 | -114dBm~-116dBm |
| 26 | -116dBm~-118dBm |
| 27 | -118dBm~-120dBm |
| 28 | -120dBm~-122dBm |
| 29 | -122dBm~-124dBm |
| 30 | -124dBm~-126dBm |
| 31 | -126dBm~-128dBm |
| 32 | -128dBm~-130dBm |
| 33 | <-130dBm |

In an embodiment of the present application, the RSRP information reported by the terminal is an index value shown in Table 3, and the RSRP value monitored by the terminal can be converted into an index value according to the corresponding relationship in Table 3 and then reported.

**Table 4**

| Index values | RSRQ values |
|---|---|
| 0 | <-19.5dB |
| 1 | -19.5dB~-19dB |
| 2 | -19dB~-18.5dB |
| 3 | -18.5dB~-18dB |
| 5 | -18dB~-17.5dB |
| 5 | -17.5dB~-17dB |
| 6 | -17dB~-16.5dB |
| 7 | -16.5dB~-16dB |
| 8 | -16dB~-15.5dB |
| 9 | -15.5dB~-15dB |
| 10 | -15dB~-14.5dB |
| 11 | -14.5dB~-14dB |
| 12 | -14dB~-13.5dB |
| 13 | -13.5dB~-13dB |
| 14 | -13dB~-12.5dB |
| 15 | -12.5dB~-12dB |
| 16 | -12dB~-11.5dB |
| 17 | -11.5dB~-11dB |
| 18 | -11dB~-10.5dB |
| 19 | -10.5dB~-10dB |
| 20 | -10dB~-9.5dB |
| 21 | -9.5dB~-9dB |
| 22 | -9dB~-8.5dB |
| 23 | -8.5dB~-8dB |
| 24 | -8dB~-7.5dB |
| 25 | -7.5dB~-7dB |
| 26 | -7dB~-6.5dB |
| 27 | -6.5dB~-6dB |
| 28 | -6dB~-5.5dB |
| 29 | -5.5dB~-5dB |
| 30 | -5dB~-4.5dB |
| 31 | -4.5dB~-4dB |
| 32 | -4dB~-3.5dB |
| 33 | -3.5dB~-3dB |
| 34 | >=-3dB |

In an embodiment of the present application, the RSRQ information reported by the terminal is an index value as shown in Table 3, and the RSRQ value monitored by the terminal may be converted into an index value according to the corresponding relationship in Table 4 and then reported.

**Table 5**

| Index values | SINR values |
|---|---|
| 0 | <-20dB |
| 1 | -20dB~-19dB |
| 2 | -19dB~-18dB |
| 3 | -18dB~-17dB |
| 5 | -17dB~-16dB |
| 5 | -16dB~-15dB |
| 6 | -15dB~-14dB |
| 7 | -14dB~-13dB |
| 8 | -13dB~-12dB |
| 9 | -12dB~-11dB |
| 10 | -11dB~-10dB |
| 11 | -10dB~-9dB |
| 12 | -9dB~-8dB |
| 13 | -8dB~-7dB |
| 14 | -7dB~-6dB |
| 15 | -6dB~-5dB |
| 16 | -5dB~-4dB |
| 17 | -4dB~-3dB |
| 18 | -3dB~-2dB |
| 19 | -2dB~-1dB |
| 20 | -1dB~0dB |
| 21 | -0dB~1dB |
| 22 | 1dB~2dB |
| 23 | 2dB~-3dB |
| 24 | 3dB~4dB |
| 25 | 4dB~-5dB |
| 26 | 5dB~6dB |
| 27 | 6dB~7dB |
| 28 | 7dB~8dB |
| 29 | 8dB~9dB |
| 30 | 9dB~10dB |
| 31 | 10dB~11dB |
| 32 | 11dB~12dB |
| 33 | 12dB~13dB |
| 34 | 13dB~14dB |
| 35 | 14dB~15dB |
| 36 | 15dB~16dB |
| 37 | 16dB~17dB |
| 38 | 17dB~18dB |
| 39 | 18dB~19dB |
| 40 | 19dB~20dB |
| 41 | >20dB |

In an embodiment of the present application, the SINR information reported by the terminal is an index value as shown in Table 3, and the SINR value monitored by the terminal may be converted into an index value according to the corresponding relationship in Table 5 and then reported.

In an embodiment of the present application, the reported CQI is consistent with the definition value in LTE system, and the reported value is also an index value, with a value range of 0-15. For details, please refer to relevant protocols, which will not be repeated here.

The reported modulation mode is also an index value. Since the downlink NPDSCH of NB-IOT system only supports QPSK modulation mode at present, this value may be filled with 0. If other modulation modes are supported, it can be accumulated backward, and the modulation mode corresponding to the specific index value is not used to limit the protection scope of the present application.

The reported number of downlink repetitions is also an index value, and the index value defined in 3GPP protocol is adopted, with a value range of 0~15 respectively corresponding to the number of downlink repetitions in the protocol. For details, please refer to relevant protocols, which will not be repeated here.

In an embodiment, the reporting modes in the present application may include, but are not limited to: periodic reporting, such as periodic reporting according to a preset period; event reporting, for example, when a coverage level where the terminal is located changes, or when a cell where the terminal is located changes, the reporting is triggered; change reporting, for example, when the terminal downlink measured value exceeds the threshold and the duration exceeds the preset threshold, the reporting is triggered; following reporting, such as following RRC connection request, following RRC connection recovery request, following RRC connection reestablishment request, etc. The terminal may initiate a connected state access and conduct a report through the MACCE using the UL Grant resource assigned by the base station, such as eNodeB, after requesting the connected state resource scheduling when there is no UL grant; or may conduct a report through MSG3 in the access procedure along with MACCE carrying a Cell Radio Network Temporary identifier (C-RNTI) and a Buffer Status Report (BSR) when there is no UL Grant.

In an embodiment, the connected state resource scheduling request includes any one or any combination of the following: a resource scheduling request reported through a Contention Free Random Access (CFRA) resource preconfigured in the connected state; a resource scheduling request reported through a buffer status report sent with semi-persistent scheduling (SPS for BSR); a resource scheduling request reported through contention-based radio access (CBRA) in the connected state; a resource scheduling request reported along with a Hybrid Automatic Repeat request-ACK/NACK (Harq-ACK/NACK).

In an exemplary example, when the configuration information received by the terminal includes a reporting mode of periodic reporting and a periodic parameter with a preset period, the terminal will set and start a periodic timer according to the preset period after entering the RRC connected state; when the periodic timer expires and there is an UL Grant, the terminal may directly enable the downlink channel quality information and the scheduling information proposed by the terminal into the MACCE (for example, a MACCE on a narrowband physical uplink shared channel (NPUSCH) in NB-IOT system) to report to the eNodeB; when there is no UL Grant, the terminal may initiate a connected state resource scheduling request (SR) procedure, and enable the downlink channel quality information and the scheduling information proposed by the terminal into the MACCE to report to the eNodeB through the UL Grant resource assigned by the eNodeB; or, may report them to the eNodeB through message 3(MSG3) in an access procedure along with MACCE carrying a cell radio network temporary identifier (C-RNTI) and a buffer status report (BSR). The MSG3 is a message 3 in random access (RA) procedure, which is also called scheduling transmission information.

In an embodiment of periodic reporting, the eNodeB may send the configuration information to the terminal through procedures such as narrowband Internet of Things-system information block type 2-NB, narrowband Internet of Things-RRC connection setup-NB, narrowband Internet of Things-RRC connection resume-NB, narrowband Internet of Things -RRC connection reestablishment-NB, or narrowband Internet of Things-RRC connection reconfiguration-NB, etc.

In an exemplary example, when the configuration information received by the terminal includes: a reporting mode of event reporting (such as receiving SR), and a plurality of event parameters, where the plurality of event parameters may include triggered events, information state reported after the event is triggered (such as receiving SR), such as channel quality type and/or indication of whether to report, etc., the terminal will enable the downlink channel quality information and the scheduling information proposed by the terminal into the MACCE to report to the eNodeB through the UL Grant resource assigned by the eNodeB according to the channel quality type and/or the indication of whether to report, after the event is triggered(such as connected resource scheduling request).

In an event reporting embodiment, the eNodeB may send the configuration information to the terminal through procedures such as system information block type2-NB, RRC connection setup-NB, RRC connection resume-NB, RRC connection reestablishment-NB, or RRC connection reconfiguration-NB, etc.

In an exemplary example, when the configuration information received by the terminal includes: a reporting mode of change reporting, and a plurality of change parameters with change conditions, the change reporting may be triggered. In an embodiment, the change conditions may include, but are not limited to, any one or any combination of the following: a difference between the current channel quality monitoring value and the last monitoring result exceeds the preset change threshold (such as the change threshold in measured values of RSRP, and/or RSPQ, and/or SINR, and/or CQI, etc.), and the duration exceeds the preset duration (such as the duration of changes in measured values of RSRP, and/or RSPQ, and/or SINR, and/or CQI, etc.). It should be noted that whether to trigger change reporting may also be determined by judging whether the current monitoring value exceeds a preset threshold, but whether the difference between the current channel quality monitoring value and the last monitoring result exceeds the preset change threshold to determine whether to trigger the change reporting or not can avoid the situation that the terminal continuously reports and takes up a lot of resources. When the coverage level where the terminal is located changes, the change reporting is triggered; when the cell where the terminal is located changes, the change reporting is triggered.

In this embodiment, the terminal monitors the downlink channel quality in real time after entering the RRC connection, and triggers change reporting if one of the above change conditions is met. After triggering the change reporting, when there is an UL Grant, the terminal may directly enable the downlink channel quality information and the scheduling information proposed by the terminal into the MACCE to report to the eNodeB; when there is no UL Grant, the terminal may initiate a connected state resource request (SR) procedure, and enable the downlink channel quality information and the scheduling information proposed by the terminal into the MACCE to report to the eNodeB through an UL Grant resource assigned by the eNodeB; or, may report them to the eNodeB through message 3(MSG3) in an access procedure along with MACCE carrying a cell radio network temporary identifier (C-RNTI) and a buffer status report (BSR).

In an embodiment of change reporting, the eNodeB may send the configuration information to the terminal through procedures such as system information block type2-NB, RRC connection setup-NB, RRC connection resume-NB, RRC connection reestablishment-NB, or RRC connection reconfiguration-NB, etc.

In an exemplary example, when the configuration information received by the terminal includes a report mode of following reporting and a plurality of following parameters including following event, i.e., a message used for reporting, the terminal may directly enable the downlink channel quality information and the scheduling information proposed by the terminal into the MACCE to report to the eNodeB during initiating RRC connection setup request, RRC connection restoration request, or RRC connection reestablishment request. In an embodiment, the following parameters may include but is not limited to: following RRC connection request, following RRC connection restoration request, following RRC connection reestablishment request, etc.

In an embodiment of following reporting, the eNodeB may send the configuration information to the terminal through, for example, system information block type2-NB.

The embodiments of the present application are applied to the NB-IOT system, and the terminal may timely feed back the downlink channel quality status to the eNodeB, and the eNodeB may select a suitable downlink coding mode according to the downlink channel quality and the scheduling information reported by the terminal, so as to reduce downlink error codes and improve the utilization rate of downlink resources. Especially for the narrowband Internet of Things system, the bandwidth is relatively small. When a large number of terminals are accessed to the system, the resources are very valuable, especially the downlink resources. Through the present application, the most suitable coding mode is selected for terminals with different channel qualities, and the reasonable and effective use of the downlink resources is realized.

The embodiment of reporting the downlink channel quality information and the scheduling information in this application will be illustrated with specific embodiments.

Fig. 2 is a schematic flow chart of an embodiment of realizing downlink information processing through periodic reporting according to the present application. In this embodiment, taking an eNodeB sending a configuration information through a system information block type2-NB message as an example, as shown in Fig. 2, steps 200 to 204 are included.

At step 200, the eNodeB enables the configuration information into the system information block type2-NB message to send to the terminal.

The configuration information includes: a reporting mode of periodic reporting and a preset periodic parameter.

In an embodiment, the configuration information may also be sent to the terminal through, for example, an RRC connection setup-NB message, an RRC connection resume-NB message, an RRC connection reestablishment-NB message, or an RRC connection reconfiguration-NB message.

At step 201, the terminal sets and starts a periodic timer according to the preset period in the configuration information after a RRC connection is established and the terminal enters the RRC connected state.

At step 202, the periodic timer expires, and the terminal enables the downlink channel quality information and the scheduling information proposed by the terminal into the MACCE to report to the eNodeB.

The MACCE is a MACCE on NPUSCH channel in NB-IOT system.

When the periodic timer expires, the terminal determines that the downlink channel quality information and the scheduling information proposed by the terminal need to be reported. The MAC control element structure can be assembled after the terminal obtains an UL Grant, and the assembly format is consistent with the MAC PDU structure in the NB-IOT system, including a MAC header and a MAC control element, where the LCID value in the MAC header is a reserved field in the original system, and the specific definition of LCID corresponding to each measurement information is shown in Table 1.

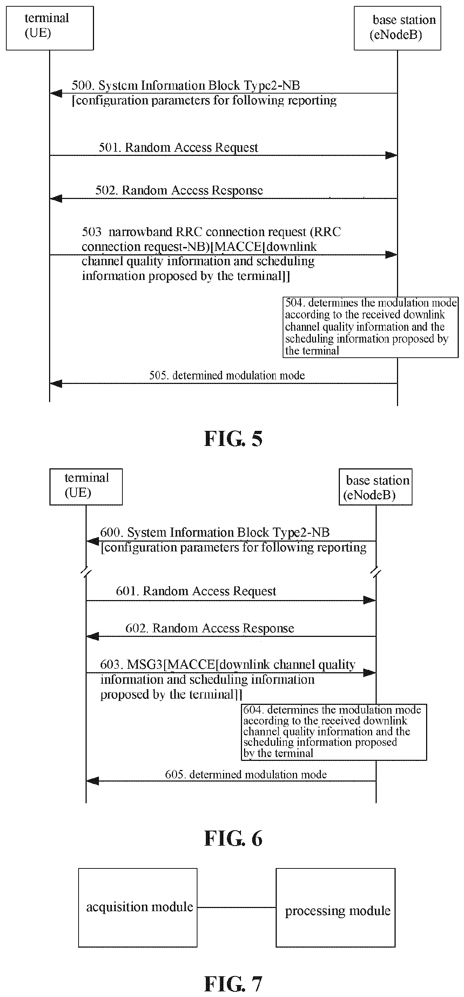

If the terminal has no UL Grant, the terminal may initiate a connected state resource scheduling request (SR), so that the downlink channel quality information and the scheduling information proposed by the terminal may be enabled into the MACCE to be reported through the UL Grant resource granted by the eNodeB. If there is MSG3 message in the resource scheduling request procedure, the downlink channel quality information and the scheduling information proposed by the terminal may be reported to the eNodeB along with MACCE carrying a BSR and a CRNTI, that is to say, they are reported through MACCE of MSG3 message. In this way, the downlink channel quality information and the scheduling information proposed by the terminal are fed back to the eNodeB in time. The procedure may be shown in Fig. 6.

In an exemplary example, the MAC control element structure is defined as shown in Table 2, where the LCG ID is fixed to 0 in the NB-IOT system, the downlink channel quality information may be one or any one or any combination of RSRP, RSRQ, SINR, CQI, etc., the scheduling information may include one or any one or any combination of MCS, modulation mode and number of downlink repetitions, and the values of these information may be index values.

The index values of the reported RSRP may include 0~33, and the specific definition is shown in Table 3. The index values of reported RSRQ may include 0~34, and the specific definition is shown in Table 4. The index values of reported SINR may include 0~41, and the specific definition is shown in Table 5.

The reported CQI is consistent with the defined value of LTE system, and the reported value is an index value, with a value range of 0~15. For details, please refer to relevant protocols, which will not be repeated here.

The reported modulation mode is also an index value. Since the downlink NPDSCH of NB-IOT system only supports QPSK modulation mode at present, this value may be filled with 0. If other modulation modes are supported, it can be accumulated backward. The modulation mode corresponding to the specific index value is not used to limit the protection scope of the present application.

The reported number of downlink repetitions is also an index value, and the index value defined in 3GPP protocol is adopted, with a value range of 0~15 respectively corresponding to the number of downlink repetitions in the protocol. For details, please refer to relevant protocols, which will not be repeated here.

At step 203, the eNodeB determines a modulation mode according to the received downlink channel quality information and the scheduling information proposed by the terminal.

The modulation mode may be a modulation mode such as BPSK, QPSK and so on specified in 3GPP protocol standard.

In an exemplary example, after the eNodeB parses out the MAC control element carrying the downlink channel quality information and the scheduling information proposed by the terminal, it adjusts the downlink coding mode according to the downlink channel quality information and the scheduling information proposed by the terminal which are reported by the terminal, for example, if the downlink channel quality is good, high-order coding mode is selected, and if it is bad, low-order coding mode is selected.

Each time the eNodeB receives the downlink channel quality information and the scheduling information proposed by the terminal, it will adjust the subsequent downlink coding mode according to the reported value. For example, assuming that the eNodeB parses out the MAC control element of RSRP, and the index value of RSRP is 8, it can be obtained from Table 3 that the actual value of RSRP is -74 dBm~-76 dBm. At this time, it can be considered that the downlink channel quality is very good, and high-order coding mode may be selected, such as MCS selection 11, 12, etc.

At step 204, the eNodeB sends the determined modulation mode to the UE.

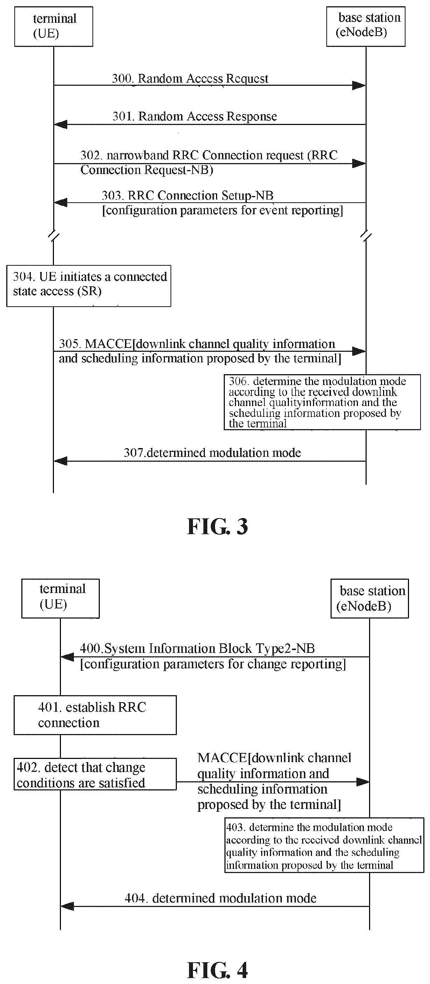

Fig. 3 is a schematic flow chart of an embodiment of realizing downlink information processing through event reporting according to the present application. In this embodiment, taking an eNodeB sending a configuration information through a RRC connection setup-NB message as an example, as shown in Fig. 3, steps 300 to 307 are included.

At steps 300 to 302, the UE initiates a random access request, and the eNodeB returns a random access response; the UE initiates a narrowband RRC connection request (RRC connection request-NB).

At step 303, the eNodeB enables the configuration information into the system information block type2-NB message to send to the terminal.

The configuration information includes: a reporting mode of event reporting and a plurality of event parameters.

In this embodiment, the plurality of event parameters may include events that trigger event reporting, such as SR, channel quality types reported and/or indications of whether to report after the events are triggered.

In an embodiment, the configuration information may also be sent to the terminal through, for example, an RRC connection setup-NB message, an RRC connection resume-NB message, an RRC connection reestablishment-NB message, or an RRC connection reconfiguration-NB message, etc.

In an exemplary example, the newly added parameters include indications of whether to report and the type of reported measurement information, and the type is defined as follows: 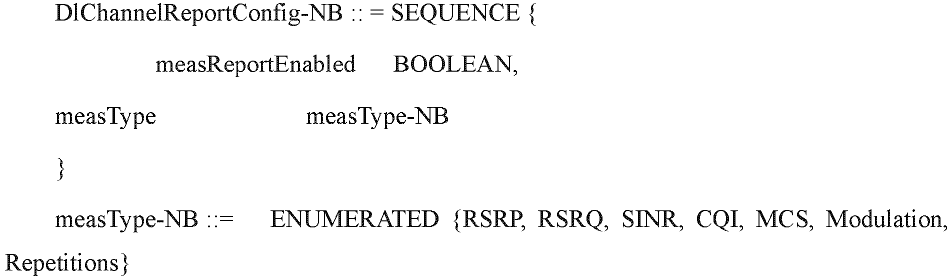 where MeasReportEnabled is a BOOLEAN value, and when the value is TRUE, it indicates that the terminal is instructed to report the downlink channel quality information and the scheduling information proposed by the terminal; when the value is FALSE, it indicates that there is no need to report the downlink channel quality information and the scheduling information proposed by the terminal. MeasType indicates the type of reported measurement information.

Upon receiving the above configuration information, if the measReportEnabled field is TRUE, the terminal will enable the designated downlink channel quality information and the scheduling information proposed by the terminal into the MACCE to report to the eNodeB through the UL Grant resource assigned by the eNodeB after the SR procedure is triggered.

At step 304, the UE initiates a connected sate access (SR).

It should be noted that between step 303 and step 304, there may be other message interactions between the UE and the eNodeB besides SR.

At step 305, since the UE initiated SR and the trigger condition of event reporting in the configuration information is met, the UE enables the downlink channel quality information and the scheduling information proposed by the terminal into the MACCE to report to the eNodeB, and the reported information met the type of time parameter in the configuration information.

Where, the MACCE is a MACCE on NPUSCH channel in NB-IOT system.

In an exemplary example, the MAC control element structure is defined as shown in Table 2, where the LCG ID is fixed to 0 in the NB-IOT system, the downlink channel quality information may be one or any one or any combination of RSRP, RSRQ, SINR, CQI, etc., the scheduling information may include one or any one or any combination of MCS, modulation mode and number of downlink repetitions, etc., and the values of these information may be index values.

The index value of the reported RSRP may include 0~33, and the specific definition is shown in Table 3. The index value of reported RSRQ may include 0~34, and the specific definition is shown in Table 4. The index value of reported SINR may include 0~41, and the specific definition is shown in Table 5.

The reported CQI is consistent with the defined value of LTE system, and the reported value is an index value, with a value range of 0~15. For details, please refer to relevant protocols, which will not be repeated here.

The reported modulation mode is also an index value. Since the downlink NPDSCH of NB-IOT system only supports QPSK modulation mode at present, this value may be filled with 0. If other modulation modes are supported, it can be accumulated backward, and the modulation mode corresponding to the specific index value is not used to limit the protection scope of the present application.

The reported number of downlink repetitions is also an index value, and the index value defined in the 3GPP protocol is adopted, with a value range of of 0~15 respectively corresponding to the number of downlink repetitions in the protocol. For details, please refer to relevant protocols, which will not be repeated here.

At step 306, the eNodeB determines a modulation mode according to the received downlink channel quality information and the scheduling information proposed by the terminal.

The modulation mode may be BPSK, QPSK and so on specified in 3GPP protocol standards.

At step 307, the eNodeB sends the determined modulation mode to the UE.

Fig. 4 is a schematic flow chart of an embodiment of realizing downlink information processing through change reporting according to the present application, in this embodiment, taking the eNodeB sending the configuration information through the system information block type2-NB message as an example, as shown in Fig. 4, steps 400 to 404 are included.

At step 400, the eNodeB enables the configuration information into the system information Block Type2-NB message to send to the terminal.

The configuration information includes: a reporting mode of change reporting, and change threshold including preset parameters and a corresponding duration.

In an embodiment, the configuration information may also be sent to the terminal through, for example, an RRC connection setup-NB message, an RRC connection resume-NB message, an RRC connection reestablishment-NB message, or an RRC connection reconfiguration-NB message, etc.

Here, different parameters may have different change thresholds, and the durations corresponding to the change thresholds of different parameters may be the same or different.

In this embodiment, it is assumed that the change threshold in the configuration information includes the change threshold of the measured value of channel, such as the change threshold in the measured value of RSRP, and/or RSPQ, and/or SINR, and/or CQI, etc.

At step 401, RRC connection is established.

It should be noted that between step 401 and step 402, there may be other message interactions between the UE and the eNodeB.

At step 402, when it is detected that a difference between the measured value of the current channel and a last monitoring result exceeds the change threshold corresponding to the parameter in the configuration information, and a duration also exceeds the duration corresponding to the parameter in the configuration information, the terminal enables the downlink channel quality information and the scheduling information proposed by the terminal into the MACCE to report to the eNodeB.

The MACCE is a MACCE on NPUSCH channel in NB-IOT system.

After receiving the configuration information of change reporting, the terminal will detect whether the change of the downlink channel quality information exceeds the change threshold, and if the change threshold is exceeded and the duration exceeds the configured duration, the procedure of reporting the downlink channel quality information and the scheduling information proposed by the terminal will be triggered.

In addition, when the cell where the terminal is located changes or the coverage level where the terminal is located changes, the procedure of reporting the downlink measurement information will also be triggered.

When the value change and duration meet the change conditions, the terminal determines that it needs to report the downlink channel quality information and the scheduling information proposed by the terminal. The MAC control element structure can be assembled after the terminal obtains an UL Grant, and the assembly format is consistent with the MAC PDU structure in the NB-IOT system, including a MAC header and a MAC control element, where the LCID value in the MAC header is a reserved field in the original system, and the specific definition of LCID corresponding to each measurement information is shown in Table 1.

If the terminal has no UL Grant, the terminal may initiate a connected state resource scheduling request (SR), so that the downlink channel quality information and the scheduling information proposed by the terminal may be enabled into the MACCE to be reported through the UL Grant resource granted by the eNodeB. If there is MSG3 message in the resource scheduling request procedure, the downlink channel quality information and the scheduling information proposed by the terminal may be reported to the eNodeB along with MACCE carrying a BSR and a CRNTI, that is to say, they are reported through MACCE of MSG3 message. In this way, the downlink channel quality information and the scheduling information proposed by the terminal are fed back to the eNodeB in time. The procedure may be shown in Fig. 6.

In an exemplary example, the MAC control element structure is defined as shown in Table 2, where the LCG ID is fixed to 0 in the NB-IOT system, the downlink channel quality information may be one or any one or any combination of RSRP, RSRQ, SINR, CQI, etc., the scheduling information may include one or any one or any combination of MCS, modulation mode and number of downlink repetitions, and the values of these information may be index values.

The index value of the reported RSRP may include 0~33, and the specific definition is shown in Table 3. The index value of reported RSRQ may include 0~34, and the specific definition is shown in Table 4. The index value of reported SINR may include 0~41, and the specific definition is shown in Table 5.

The reported CQI is consistent with the defined value of LTE system, and the reported value is an index value, with a value range of 0~15. For details, please refer to relevant protocols, which will not be repeated here.

The reported modulation mode is also an index value. Since the downlink NPDSCH of NB-IOT system only supports QPSK modulation mode at present, this value may be filled with 0. If other modulation modes are supported, it can be accumulated backward. The modulation mode corresponding to the specific index value is not used to limit the protection scope of the present application.

The reported number of downlink repetitions is also an index value, and the index value defined in 3GPP protocol is adopted, with a value range of 0~15 respectively corresponding to the number of downlink repetitions in the protocol. For details, please refer to relevant protocols, which will not be repeated here.

In an exemplary example, if the RSRP change threshold in the configuration information is configured as 5 dB and the change duration is configured as 500ms, the RSRP value measured by the terminal in the previous (last) monitoring is -85dBm. If the wireless channel is interfered all the time, the measured RSRP will change to -93dBm, that is, the RSRP value is reduced by 8dB, exceeding the configured RSRP change threshold (5dB). If the change duration (that is, the change duration corresponding to the RSRP change threshold) exceeds 500ms, the procedure of reporting the downlink channel quality information and the scheduling information proposed by the terminal will be triggered.

At step 403, the eNodeB determines the modulation mode according to the received downlink channel quality information and the scheduling information proposed by the terminal.

The modulation mode may be BPSK, QPSK and so on specified in 3GPP protocol standards.

At step 404, the eNodeB sends the determined modulation mode to the UE.

Fig. 5 is a schematic flow chart of an embodiment of realizing downlink information processing through following reporting according to the present application. In this embodiment, taking an RRC connection request-NB message as an example, the downlink channel quality information and the scheduling information proposed by the terminal are reported in the RRC establishment procedure. In addition, the RRC connection resume Request-NB message and the RRC connection reestablishment request-NB message may also be used to carry the downlink channel quality information and the scheduling information proposed by the terminal, the embodiment procedures of which are similar to that in Fig. 5, and will not be repeated here. As shown in Fig. 5, steps 500 to 505 are included.

At step 500, the eNodeB enables the configuration information into the system information block type2-NB message to send to the terminal.

The configuration information includes: a reporting mode of following reporting, and preset following parameters, that is, following RRC connection request reporting.

At step 501 to step 502, the UE initiates a random access request, and the eNodeB returns a random access response.

At step 503, the terminal enables the downlink channel quality information and the scheduling information proposed by the terminal into a MACCE to report to the eNodeB according to the following parameters in the configuration information, accompanying with the RRC Connection Request-NB.

In an embodiment, for RRC recovery and RRC reestablishment procedure, the downlink channel quality information and the scheduling information proposed by the terminal may be reported along with the MACCE carrying RRC Connection resume request-NB message and RRC connection reestablishment request-NB message, respectively.

In an exemplary example, the MAC control element structure is defined as shown in Table 2, where the LCG ID is fixed to 0 in the NB-IOT system, the downlink channel quality information may be one or any one or any combination of RSRP, RSRQ, SINR, CQI, etc., the scheduling information may include one or any one or any combination of MCS, modulation mode and number of downlink repetitions, and the values of these information may be index values.

The index value of the reported RSRP may include 0~33, and the specific definition is shown in Table 3. The index value of reported RSRQ may include 0~34, and the specific definition is shown in Table 4. The index value of reported SINR may include 0~41, and the specific definition is shown in Table 5.

The reported CQI is consistent with the defined value of LTE system, and the reported value is an index value, with a value range of 0~15. For details, please refer to relevant protocols, which will not be repeated here.

The reported modulation mode is also an index value. Since the downlink NPDSCH of NB-IOT system only supports QPSK modulation mode at present, this value may be filled with 0. If other modulation modes are supported, it can be accumulated backward. The modulation mode corresponding to the specific index value is not used to limit the protection scope of the present application.

The reported number of downlink repetitions is also an index value, and the index value defined in 3GPP protocol is adopted, with a value range of 0~15 respectively corresponding to the number of downlink repetitions in the protocol. For details, please refer to relevant protocols, and they will not be repeated here.

At step 504, the eNodeB determines the modulation mode according to the received downlink channel quality information and the scheduling information proposed by the terminal.

The modulation mode may be BPSK, QPSK and so on specified in 3GPP protocol standards.

At step 505, the eNodeB sends the determined modulation mode to the UE.

Fig. 6 is a schematic flow chart of another embodiment of realizing downlink information processing through following reporting according to the present application. In this embodiment, after the terminal triggers a connected state resource scheduling request (SR), the downlink channel quality information and the scheduling information proposed by the terminal are enabled into the MACCE of MSG3 to be reported. As shown in Fig. 6, steps 600 to 605 are included.

At step 600, the eNodeB enables the configuration information into the system information block type2-NB message to send to the terminal.

The configuration information includes: a reporting mode of following reporting, and preset following parameters. That is, the downlink channel quality information and the scheduling information proposed by the terminal are enabled into the MACCE to be reported accompanying with MSG3 in the access procedure.

It should be noted that between step 600 and step 601, there may be other message interactions between the UE and the eNodeB.

At step 601 to step 602, the UE initiates a random access request, and the eNodeB returns a random access response.

At step 603, the terminal enables the downlink channel quality information and the scheduling information proposed by the terminal into the MACCE to report to the eNodeB according to the following parameters in the configuration information, accompanying with MSG3.

At step 604, the eNodeB determines the modulation mode according to the received downlink channel quality information and the scheduling information proposed by the terminal.

The modulation mode may be BPSK, QPSK and so on specified in 3GPP protocol standards.

At step 605, the eNodeB sends the determined modulation mode to the UE.

It may also be reported through MACCE of UL Grant resource given by eNodeB to the terminal afterward.

The connected state resource scheduling requests include at least one of the following: a resource scheduling request reported through CFRA resource preconfigured in the connected state, a resource scheduling request reported through SPS for BSR, a resource scheduling request reported through CBRA procedure in the connected state, and a resource scheduling request reported along with Harq-ACK/NACK.

According to an embodiment of the present application, a computer readable storage medium is further provided, where the computer readable storage medium stores computer executable instructions, which are set to execute the downlink information processing method described in any of the above.

According to an embodiment of the present application, an electronic device for realizing monitoring is further provided, including a processor and a memory storing a computer program executable on the processor, which is set to execute any of the steps of the downlink information processing.

Fig. 7 is a schematic structural diagram of a downlink information processing apparatus according to the present application, as shown in Fig. 7, the apparatus at least includes an acquisition module and a processing module.

The acquisition module is configured to acquire configuration information.

The processing module is configured to carry, according to the configuration information, downlink channel quality information and scheduling information into a MACCE to report to a base station.

The MACCE is a way to exchange control information between UE and network besides RRC message and NAS message in LTE, that is, MACCE exchanges control information with respect to MAC layer.

In this application, the downlink information processing apparatus uses MACCE to carry downlink measurement information and scheduling information, and directly reports the downlink measurement information and the scheduling information to the MAC layer. In this way, if the MAC layer needs to adjust the coding mode according to the link, the process of notifying the MAC layer after RRC decoding in related technologies is avoided, and the adjustment of the downlink coding mode is ensured to quickly adapt to the change of the downlink channel. Moreover, the terminal also reports the scheduling information proposed by itself to the base station, which forms a dynamic negotiation process for scheduling information between the terminal and the base station, and better ensures the adaptability of the downlink coding mode to the change of downlink information.

In an embodiment, the downlink channel quality information includes any one or any combination of the following: Reference Signal Received Power(RSRP), which may be a RSRP measured by the terminal in LTE or NB-IOT system; Reference Signal Received Quality(RSRQ), which may be a RSRQ measured by the terminal in LTE or NB-IOT system; channel quality indicator(CQI), which may be a CQI defined in 3GPP protocol standard, that is, a CQI information used in LTE system; signal to interference plus noise ratio(SINR), which may be a SINR measured by the terminal in LTE or NB-IOT system.

In an embodiment, the scheduling information reported by the terminal is a scheduling information proposed by the terminal according to the current channel condition, including any one or any combination of the following: Modulation and Coding Scheme (MCS); modulation mode, which may be Binary Phase Shift Keying (BPSK), Quadrature Phase Shift Keying (QPSK) and so on specified in 3GPP protocol standards.

The number of downlink repetitions may be the number of repetitions of a Narrowband Physical Downlink Control Channel (NPDCCH) or a Narrowband Physical Downlink Shared Channel (NPDSCH) proposed by the terminal.

In this embodiment of the present application, the downlink channel quality information and the scheduling information may be carried by extending the MAC control element.

The extended MAC control element structure for carrying the downlink channel quality information and the scheduling information, as shown in Table 2, may occupy 8bits, including a logical channel group ID (LCG ID) field and an information field for carrying the downlink channel quality information and the scheduling information.

In an embodiment, in the NB-IOT system, the value of the LCG ID field is set to 0, and the information carried in the information field may include, but is not limited to, any one or any combination of the following: RSRP, RSRQ, SINR, CQI, MCS, modulation mode or number of downlink repetitions, etc.

In an embodiment, the information carried in the information field may be an index value corresponding to a real value.

In an embodiment, the reporting modes in this application may include, but are not limited to, periodic reporting, such as periodic reporting according to a preset period; event reporting, for example, when a coverage level where the terminal is located changes, or when a cell where the terminal is located changes; change reporting, for example, when the terminal downlink measured value exceeds the threshold and the duration exceeds the preset threshold, the reporting is triggered; following reporting, such as following RRC connection request, following RRC connection recovery request, following RRC connection reestablishment request, etc.. The terminal may initiate a connected state access and conduct a report through the MACCE using the UL Grant resource assigned by the base station, such as eNodeB, after requesting the connected state resource scheduling when there is no UL grant; or may conduct a report through MSG3 in the access procedure along with MACCE carrying a cell radio network temporary identifier (C-RNTI) and a buffer status report (BSR) when there is no UL Grant.

In an embodiment, the connected state resource scheduling request includes any one or any combination of the following: a resource scheduling request reported through a contention free random access (CFRA) resource preconfigured in the connected state; a resource scheduling request reported through a buffer status report sent with semi-persistent scheduling (SPS for BSR); a resource scheduling request reported through a contention-based random access (CBRA) in the connected state; a resource scheduling request reported along with a Hybrid Automatic Repeat request--ACK/NACK (Harq-ACK/NACK).

## Claims

1. A downlink information processing method, comprising:
acquiring (100), by a terminal, configuration information comprising a reporting mode and a corresponding parameter;
carrying (101), by the terminal, based on the configuration information, downlink channel quality information and scheduling information in a Media Access Control Control Element, MACCE, to report to a base station;
wherein the reporting mode comprises periodic reporting and the corresponding parameter comprises a preset periodic parameter;
wherein carrying downlink channel quality information and scheduling information in a MACCE to report to a base station comprises:
setting and starting a periodic timer according to the preset period in response to the terminal having entered a Radio Resource Control, RRC connected state;
carrying, by the terminal, the downlink channel quality information and the scheduling information proposed by the terminal in the MACCE to report to the base station in response to the periodic timer expiring and the terminal having an UpLink Grant, UL Grant;
initiating, by the terminal, a connected state resource Scheduling Request, SR, and carrying the downlink channel quality information and the scheduling information proposed by the terminal into the MACCE to report to the base station through an UL Grant resource assigned by the base station; or, initiating by the terminal, the connected state resource Scheduling Request, SR, and carrying the downlink channel quality information and the scheduling information proposed by the terminal in the MACCE to report to the base station through MSG3 in an access procedure, in response to the periodic timer expiring and the terminal having no UL Grant.

2. The downlink information processing method according to claim 1, further comprising: receiving, by the terminal, a modulation mode from the base station;
wherein, the modulation mode is determined by the base station according to the downlink channel quality information and the scheduling information proposed by the terminal.

3. The downlink information processing method according to claim 1, wherein the reporting mode comprises event reporting and the corresponding parameter comprises a plurality of event parameters; wherein the plurality of event parameters comprise a preset triggered event and an information state reported after the event is triggered.

4. The downlink information processing method according to claim 3, wherein carrying downlink channel quality information and scheduling information in a MACCE to report to a base station comprises:
carrying, by the terminal, the downlink channel quality information and the scheduling information proposed by the terminal in the MACCE to report to the base station through an UL Grant resource assigned by the base station according to the information state reported after the triggered event is triggered.

5. The downlink information processing method according to claim **1,** wherein the reporting mode comprises change reporting and the corresponding parameter comprises a plurality of change parameters; wherein the plurality of change parameters comprise a preset change threshold and a duration corresponding to the change threshold.

6. The downlink information processing method according to claim 5, wherein carrying downlink channel quality information and scheduling information in a MACCE to report to a base station comprises:
in response to the terminal having entered the RRC connection and at least one of the following cases occurs: it is monitored that a difference between a current channel quality and a last monitoring result exceeds the change threshold and a duration exceeds the duration corresponding to the change threshold, a coverage level where the terminal is located changes, and a cell where the terminal is located changes, performing by the terminal, the following operations:
carrying, by the terminal, the downlink channel quality information and the scheduling information proposed by the terminal in the MACCE to report to the base station in response to the terminal having an UL Grant;
initiating by the terminal, a SR, and carrying the downlink channel quality information and the scheduling information proposed by the terminal in the MACCE to report to the base station through an UL Grant resource assigned by the base station ; or, initiating by the terminal, the SR, and carrying the downlink channel quality information and the scheduling information proposed by the terminal in the MACCE to report to the base station through MSG3 in an access procedure, in response to the terminal having no UL Grant.

7. The downlink information processing method according to claim 1, wherein the reporting mode comprises following reporting and the corresponding parameter comprises a plurality of following parameters; wherein, the plurality of following parameters comprise a message used for reporting.

8. The downlink information processing method according to claim 7, wherein carrying downlink channel quality information and scheduling information in a MACCE to report to a base station comprises:
carrying, by the terminal, the downlink channel quality information and the scheduling information proposed by the terminal in the MACCE to report to the base station when the terminal initiates a message presented in the plurality of following parameters.

9. The downlink information processing method according to claim 1 or 6, wherein the connected state resource scheduling request comprises any one or any combination of the following:
a resource scheduling request reported through a contention free random access(CFRA) resource preconfigured in the connected state;
a resource scheduling request reported through a buffer status report sent with semi-persistent scheduling;
a resource scheduling request reported through a contention-based random access(CBRA) in the connected state;
a resource scheduling request reported along with a Hybrid Automatic Repeat request-ACK/NACK.

10. The downlink information processing method according to claim 1, wherein acquiring by the terminal, the configuration information comprises:
acquiring by the terminal, the configuration information from a systematic message received from the base station and a RRC signaling;
or, reading by the terminal, the configuration information preconfigured by the terminal.

11. The downlink information processing method according to any of claims 1 to 10, wherein the downlink channel quality information comprises any one or any combination of the following:
Reference Signal Received Power, RSRP;
Reference Signal Received Quality, RSRQ;
Channel Quality Indicator, CQI;
Signal to Interference plus Noise Ratio, SINR.

12. The downlink information processing method according to any of claims 1 to 10, wherein the scheduling information comprises any one or any combination of the following:
Modulation and Coding Scheme, MCS;
modulation mode;
number of downlink repetitions.

13. The downlink information processing method according to any of claims 1 to 10, wherein the downlink channel quality information and the scheduling information are carried in a Logical Channel Group Identifier, LCG ID, in an extended MACCE.

14. The downlink information processing method according to claim 13, wherein the extended MACCE structure comprises 8 bits, the extended MACCE structure comprises an LCG ID field and an information field for carrying the downlink channel quality information and the scheduling information.

15. An electronic device for realizing information processing, comprising a processor and a memory storing a computer program executable on the processor, which is set to execute the downlink information processing method according to any of claims 1 to 14.

## Patentansprüche

1. Downlink-Informationsverarbeitungsverfahren, umfassend:
Erlangen (100), durch ein Terminal, einer Konfigurationsinformation, umfassend einen Bericht-Modus und einen entsprechenden Parameter;
Tragen (101), durch das Terminal, basierend auf den Konfigurationsinformationen, von Downlink-Kanalqualitätsinformationen und Scheduling-Informationen in einem Media-Access-Control-Control-Element, MACCE, zum Berichten an eine Basisstation;
wobei der Bericht-Modus periodisches Berichten umfasst und der entsprechende Parameter einen voreingestellten periodischen Parameter umfasst,
wobei Tragen von Downlink-Kanalqualitätsinformationen und Scheduling-Informationen in ein MACCE zum Berichten an eine Basisstation umfasst:
Einstellen und Starten eines periodischen Timers gemäß der voreingestellten Periode als Antwort darauf, dass das Terminal in einen Radio-Resource-Control, RCC, Connected-State eingetreten ist;
Tragen, durch das Terminal, der Downlink-Kanalqualitätsinformationen und der Scheduling-Informationen, die vorgeschlagen sind durch das Terminal, in das MACCE zum Berichten an die Basisstation, als Antwort auf Auslaufen des periodischen Timers und darauf, dass das Terminal einen UpLink-Grant, UL-Grant, aufweist;
Initiieren, durch das Terminal, einer Connected-State-Resource-Scheduling-Anfrage, SR, und Tragen der Downlink-Kanalqualitätsinformationen und der Scheduling-Informationen, die durch das Terminal vorgeschlagen sind, in das MACCE zum Berichten an die Basisstation über eine UL-Grant-Ressource, die durch die Basisstation zugeordnet ist; oder Initiieren, durch das Terminal, der Connected-State-Resource-Scheduling-Anfrage, SR, und Tragen der der Downlink-Kanalqualitätsinformationen und der Scheduling-Informationen, die vorgeschlagen sind durch das Terminal, in das MACCE zum Berichten an die Basisstation, über MSG3 in einer Zugriffsprozedur, als Antwort auf Ablaufen des periodischen Timers und darauf, dass das Terminal keinen UL-Grant hat.

2. Downlink-Informationsverarbeitungsverfahren nach Anspruch 1, ferner umfassend:
Empfangen, durch das Terminal, eines Modulations-Modus von der Basisstation;
wobei der Modulations-Modus bestimmt wird durch die Basisstation gemäß der Downlink-Kanalqualitätsinformationen und der Scheduling-Informationen, die vorgeschlagen sind durch das Terminal.

3. Downlink-Informationsverarbeitungsverfahren nach Anspruch 1, wobei der Berichts-Modus Ereignisberichten umfasst, und der entsprechende Parametereine Mehrzahl von Ereignisparametern umfasst; wobei die Mehrzahl der Ereignisparameter ein voreingestelltes ausgelöstes Ereignis und einen Informationsstatus umfasst, berichtet nachdem das Ereignis ausgelöst ist.

4. Downlink-Informationsverarbeitungsverfahren nach Anspruch 3, wobei Tragen von Downlink-Kanalqualitätsinformationen und Scheduling-Informationen in ein MACCE zum Berichten an eine Basisstation umfasst:
Tragen, durch das Terminal, der Downlink-Kanalqualitätsinformationen und der Scheduling-Informationen, die vorgeschlagen sind durch das Terminal, in das MACCE zum Berichten an die Basisstation über eine UL-Grant-Ressource, die durch die Basisstation zugeordnet ist, gemäß des Informationsstatus, berichtet nachdem das Ereignis ausgelöst ist.

5. Downlink-Informationsverarbeitungsverfahren nach Anspruch 1, wobei der Berichts-Modus Änderungsberichten umfasst, und der entsprechende Parameter eine Mehrzahl von Änderungsparametern umfasst; wobei die Mehrzahl der Änderungsparameter einen voreingestellten Änderungsschwellenwert und eine Dauer umfasst, die dem Änderungsschwellenwert entspricht.

6. Downlink-Informationsverarbeitungsverfahren nach Anspruch 5, wobei Tragen von Downlink-Kanalqualitätsinformationen und Scheduling-Informationen in ein MACCE zum Berichten an eine Basisstation umfasst:
als Antwort darauf, dass das Terminal in die Radio-Resource-Control, RCC, Verbindung eingetreten ist und mindestens einer der folgenden Fälle auftritt: es wird beobachtet, dass eine Differenz zwischen der aktuellen Kanalqualität und einem letzten Beobachtungsergebnis den Änderungsschwellenwert überschreitet, und dass eine Dauer die Dauer, die dem Änderungsschwellenwert entspricht, überschreitet, sich ein Abdeckungslevel, in dem sich das Terminal befindet, ändert, und eine Zelle, in der sich das Terminal befindet, ändert, durch das Terminal die folgenden Operationen ausgeführt werden:
Tragen, durch das Terminal, der Downlink-Kanalqualitätsinformationen und der Scheduling-Informationen, die vorgeschlagen sind durch das Terminal, in das MACCE zum Berichten an die Basisstation, als Antwort darauf, dass das Terminal einen UL-Grant, aufweist;
Initiieren, durch das Terminal, einer SR, und Tragen der Downlink-Kanalqualitätsinformationen und der Scheduling-Informationen, die durch das Terminal vorgeschlagen sind, in das MACCE zum Berichten an die Basisstation über eine UL-Grant-Ressource, die durch die Basisstation zugeordnet ist; oder Initiieren, durch das Terminal, der SR, und Tragen der Downlink-Kanalqualitätsinformationen und der Scheduling-Informationen, die vorgeschlagen sind durch das Terminal, in das MACCE zum Berichten an die Basisstation, über MSG3 in einer Zugriffsprozedur, als Antwort darauf, dass das Terminal keinen UL-Grant hat.

7. Downlink-Informationsverarbeitungsverfahren nach Anspruch 1, wobei der Bericht-Modus Folgeberichten umfasst und der entsprechende Parameter eine Mehrzahl von Folgeparametern umfasst; wobei die Mehrzahl von Folgeparametern eine Nachricht umfasst, die zum Berichten verwendet wird.

8. Downlink-Informationsverarbeitungsverfahren nach Anspruch 7, wobei Tragen von Downlink-Kanalqualitätsinformationen und Scheduling-Informationen in ein MACCE zum Berichten an eine Basisstation umfasst:
Tragen, durch das Terminal, der Downlink-Kanalqualitätsinformationen und der Scheduling-Informationen, die durch das Terminal vorgeschlagen sind, in das MACCE zum Berichten an eine Basisstation, wenn das Terminal eine Nachricht initiiert, die in der Mehrzahl der Folgeparameter dargestellt ist.

9. Downlink-Informationsverarbeitungsverfahren nach einem der Ansprüche 1 oder 6, wobei die Connected-State-Resource-Scheduling-Anfrage eine oder eine Kombination aus den Folgenden umfasst:
eine Resource-Scheduling-Anfrage, berichtet über einen kontentionsfreien Random-Access Zugriff (CFRA) in dem Connected-State;
eine Resource-Scheduling-Anfrage, berichtet über einen Puffer-Statusbericht, der mit semipersistenten Scheduling gesendet ist;
eine Resource-Scheduling-Anfrage, berichtet über einen kontentionsbasierten Random-Access Zugriff (CBRA) in dem Connected-State
eine Resource-Scheduling-Anfrage, berichtet zusammen mit einer Hybrid-Automatic-Repeat-Anfrage-ACK/NACK.

10. Downlink-Informationsverarbeitungsverfahren nach Anspruch 1, wobei Erlangen, durch das Terminal, der Konfigurationsinformation umfasst:
Erlangen, durch das Terminal, der Konfigurationsinformation von einer systematischen Nachricht, die von der Basisstation empfangen ist, und einer RCC-Signalisierung; oder Lesen, durch das Terminal, der durch das Terminal vorkonfigurierten Konfigurationsinformation

11. Downlink-Informationsverarbeitungsverfahren nach einem der Ansprüche 1-10, wobei die Downlink-Kanalqualitätsinformationen eine oder eine Kombination aus den Folgenden umfasst:
Referenzsignalempfangsleistung, RSRP
Referenzsignalempfangsqualität, RSRQ;
Kanalqualitätsindikator, CQI;
Signal-zu-Störungs-plus-Rausch-Ratio, SINR.

12. Downlink-Informationsverarbeitungsverfahren nach einem der Ansprüche 1-10, wobei die Scheduling-Informationen ein oder eine Kombination aus den Folgenden umfassen:
Modulations- und Codingschema, MCS;
Modulations-Modus;
Anzahl von Downlink Wiederholungen.

13. Downlink-Informationsverarbeitungsverfahren nach einem der Ansprüche 1-10, wobei die Downlink-Kanalqualitätsinformationen und die Scheduling-Informationen getragen werden in einem logischen Kanalgruppenidentifizierer, LCG ID, in ein erweitertes MACCE.

14. Downlink-Informationsverarbeitungsverfahren nach Anspruch 13, wobei die erweiterte MACCE Struktur 8 Bit umfasst, und die erweiterte MACCE Struktur ein LCG ID Feld und ein Informationsfeld umfasst, zum Tragen der Downlink-Kanalqualitätsinformationen und der Scheduling-Informationen.

15. Elektronisches Gerät zum Realisieren von Informationsverarbeitung, umfassend einen Prozessor und einen Speicher, der ein Computerprogramm speichert, das auf dem Prozessor ausführbar ist, der so eingestellt ist, dass er das Downlink-Informationsverarbeitungsverfahren gemäß einem der Ansprüche 1 bis 14 ausführt.

## Revendications

1. Un procédé de traitement d'informations de liaison descendante, comprenant :
le fait (100), par un terminal, d'acquérir des informations de configuration comprenant un mode de notification et un paramètre correspondant ;
le fait (101), par le terminal, de transporter, sur la base des informations de configuration, des informations de qualité de canal de liaison descendante et des informations de planification dans un élément de contrôle d'accès au support, MACCE, afin de les notifier à une station de base ;
le mode de notification comprenant le fait de procéder à une notification périodique, et le paramètre correspondant comprenant un paramètre périodique prédéfini ;
le transport des informations de qualité du canal de liaison descendante et des informations de planification dans un MACCE destiné à être notifié à une station de base comprenant :
le fait de définir et de démarrer une minuterie périodique en fonction de la période prédéfinie en réponse au fait que le terminal soit entré dans un état connecté de commande de ressources radio (RRC) ;
le fait, par le terminal, de transporter les informations de qualité du canal de liaison descendante et les informations de planification proposées par le terminal dans le MACCE afin de les notifier à la station de base en réponse à l'expiration de la minuterie périodique et au fait que le terminal dispose d'une autorisation de liaison montante (UpLink Grant, UL Grant) ;
le fait, par le terminal, de lancer une demande de planification de ressources en état connecté, SR, et de transporter les informations de qualité du canal de liaison descendante et les informations de planification proposées par le terminal dans le MACCE afin de les notifier à la station de base via une ressource UL Grant attribuée par la station de base ; ou le fait, par le terminal, de lancer la demande de planification, SR, de ressources en état connecté, et de transporter les informations de qualité du canal de liaison descendante et les informations de planification proposées par le terminal dans le MACCE afin de les notifier à la station de base via MSG3 dans une procédure d'accès, en réponse à l'expiration de la minuterie périodique et au fait que le terminal n'a pas d'autorisation UL Grant.

2. Le procédé de traitement d'informations de liaison descendante selon la revendication 1, comprenant en outre :
le fait, par le terminal, de recevoir un mode de modulation en provenance de la station de base ;
le mode de modulation étant déterminé par la station de base en fonction des informations de qualité du canal de liaison descendante et des informations de planification proposées par le terminal.

3. Le procédé de traitement d'informations de liaison descendante selon la revendication 1, dans lequel le mode de notification comprend le fait de notifier un événement, et le paramètre correspondant comprend une pluralité de paramètres d'événement ;
la pluralité de paramètres d'événement comprend un événement déclenché prédéfini et un état d'information notifié après le déclenchement de l'événement.

4. Le procédé de traitement d'informations de liaison descendante selon la revendication 3, dans lequel le transport d'informations de qualité de canal de liaison descendante et d'informations de planification dans un MACCE à notifier à une station de base comprend :
le fait, par le terminal, de transporter les informations de qualité de canal de liaison descendante et les informations de planification proposées par le terminal dans le MACCE à notifier à la station de base par l'intermédiaire d'une ressource UL Grant attribuée par la station de base en fonction de l'état d'information notifié après que de l'événement déclenché ait été déclenché.

5. Le procédé de traitement d'informations de liaison descendante selon la revendication 1, dans lequel le mode de signalisation comprend la notification de changements, et le paramètre correspondant comprend une pluralité de paramètres de changement ;
la pluralité de paramètres de changement comprenant un seuil de changement prédéfini et une durée correspondant au seuil de changement.

6. Le procédé de traitement d'informations de liaison descendante selon la revendication 5, dans lequel le transport d'informations de qualité de canal de liaison descendante et d'informations de planification dans un MACCE à signaler à une station de base comprend :
en réponse au fait que le terminal soit entré dans la connexion RRC et qu'au moins l'un des cas suivants se présente : il est détecté qu'une différence entre une qualité de canal actuelle et un dernier résultat de surveillance dépasse le seuil de changement et qu'une durée dépasse la durée correspondant au seuil de changement, un niveau de couverture où se trouve le terminal change, et une cellule où se trouve le terminal change, le fait, par le terminal, d'effectuer les opérations suivantes :
transporter, par le terminal, les informations de qualité du canal descendant et les informations de planification proposées par le terminal dans le MACCE afin de les communiquer à la station de base en réponse au terminal ayant une autorisation UL ;
lancer, par le terminal, une SR, et transporter les informations de qualité du canal descendant et les informations de planification proposées par le terminal dans le MACCE afin de les notifier à la station de base via une ressource UL Grant attribuée par la station de base ; ou, lancer, par le terminal, la SR, et transporter les informations de qualité du canal de liaison descendante et les informations de planification proposées par le terminal dans le MACCE à notifier à la station de base via MSG3 dans une procédure d'accès, en réponse au fait que le terminal n'a pas d'autorisation UL Grant.

7. Le procédé de traitement d'informations de liaison descendante selon la revendication 1, dans lequel le mode de notification comprend une notification de suivi, et le paramètre correspondant comprend une pluralité de paramètres de suivi ;
la pluralité de paramètres de suivi comprend un message utilisé pour la notification.

8. Le procédé de traitement d'informations de liaison descendante selon la revendication 7, dans lequel le transport d'informations de qualité de canal de liaison descendante et d'informations de planification dans un MACCE à notifier à une station de base comprend :
le fait, par le terminal, de transporter les informations de qualité de canal de liaison descendante et les informations de planification proposées par le terminal dans le MACCE à notifier à la station de base lorsque le terminal lance un message présenté dans la pluralité de paramètres de suivi.

9. Le procédé de traitement d'informations de liaison descendante selon la revendication 1 ou 6, dans lequel la demande de planification de ressources à l'état connecté comprend l'un quelconque ou une combinaison quelconque des éléments suivants :
une demande de planification de ressources notifiée par l'intermédiaire d'un accès aléatoire sans contention (CFRA) préconfiguré à l'état connecté ;
une planification de ressources notifiée par une demande notifiée par l'intermédiaire d'un rapport d'état de mémoire tampon envoyé avec une planification semi-persistante ;
une demande de planification de ressources notifiée par un accès aléatoire basé sur la contention (CBRA) dans l'état connecté ;
une demande de planification de ressources signalée avec une demande de répétition automatique hybride ACK/NACK.

10. Le procédé de traitement d'informations de liaison descendante selon la revendication 1, dans lequel l'acquisition par le terminal des informations de configuration comprend :
le fait, par le terminal, d'acquérir les informations de configuration à partir d'un message systématique reçu de la station de base et d'une signalisation RRC ;
ou le fait, par le terminal, de lire les informations de configuration préconfigurées par le terminal.

11. Le procédé de traitement d'informations de liaison descendante selon l'une quelconque des revendications 1 à 10, dans lequel les informations de qualité du canal de liaison descendante comprennent l'un quelconque des éléments suivants ou une combinaison quelconque des éléments suivants :
Puissance du signal de référence reçu, RSRP ;
Qualité du signal de référence reçu, RSRQ ;
Indicateur de qualité du canal, CQI,
Rapport signal/interférence plus bruit, SINR.

12. Le procédé de traitement d'informations de liaison descendante selon l'une quelconque des revendications 1 à 10, dans lequel les informations de planification comprennent l'un quelconque des éléments suivants ou une combinaison quelconque des éléments suivants :
Schéma de modulation et de codage, MCS ;
mode de modulation ;
nombre de répétitions de liaison descendante.

13. Le procédé de traitement d'informations de liaison descendante selon l'une quelconque des revendications 1 à 10, dans lequel les informations de qualité du canal de liaison descendante et les informations de planification sont transportées dans un identifiant de groupe de canaux logiques, LCG ID, dans un MACCE étendu.

14. Le procédé de traitement d'informations de liaison descendante selon la revendication 13, dans lequel la structure MACCE étendue comprend 8 bits, la structure MACCE étendue comprend un champ LCG ID et un champ d'informations pour transporter les informations de qualité du canal de liaison descendante et les informations de planification.

15. Un dispositif électronique pour réaliser un traitement d'informations, comprenant un processeur et une mémoire stockant un programme informatique exécutable sur le processeur, qui est configuré pour mettre en œuvre le procédé de traitement d'informations de liaison descendante selon l'une quelconque des revendications 1 à 14.
